# EUROPÄISCHE PATENTSCHRIFT

(11) **EP 3 487 463 B1**
(45) Veröffentlichungstag und Bekanntmachung des Hinweises auf die Patenterteilung: **24.02.2021**
(21) Anmeldenummer: 17758028.9
(22) Anmeldetag: 19.07.2017
(51) Int. Cl.: A61H 3/04, A63B 71/00, A63B 26/00

(54) **FORTBEWEGUNGSHILFE**
WALKING AID
DÉAMBULATEUR

(30) Priorität: 20.07.2016 DE 102016113401
(43) Veröffentlichungstag der Anmeldung: 29.05.2019
(73) Patentinhaber: Otto-von-Guericke-Universität Magdeburg, 39106 Magdeburg (DE)
(72) Erfinder: HÖKELMANN, Anita, 39167 Niederdodeleben (DE); WEICHELT, Susanne, 04683 Belgershein (DE); PARTIE, Marcel, 06484 Quedlinburg (DE)
(74) Vertreter: Gramm, Lins & Partner Patent- und Rechtsanwälte PartGmbB
(86) Internationale Anmeldenummer: PCT/DE2017/100598
(87) Internationale Veröffentlichungsnummer: WO 2018/014912

(56) Entgegenhaltungen:
- US-A1- 2013 181 489
- US-A1- 2014 084 559

## Beschreibung

Die Erfindung ist eine Fortbewegungshilfe im Bereich Sport/ Tanz - und Therapie, für motorisch und/ oder kognitiv eingeschränkte Personen.

Es existieren zahlreiche Fortbewegungshilfen, mit vorzugsweise drei oder mehr Rädern, wie beispielsweise ein Rollator, für Personen unterschiedlichen Alters und unterschiedlicher Bewegungseinschränkung, beispielsweise für Personen mit leichten Gehproblemen, die einen herkömmlichen Rollator nutzen.

Derzeitige Standard-Rollatoren wie DE102011080056B4 sind für Menschen mit Mobilitätsproblemen eine Lösung für alltäglich anfallende Wege wie Spaziergänge, Einkäufe oder Arztbesuche. Das Tanzen mit Standard-Rollatoren ist bereits seit 2011 Bestandteil vieler Sport- bzw. Bewegungsangebote in Deutschland. Jedoch lassen das Standard-Gerät sowie alle anderen handelsüblichen Rollatormodelle in ihrer Handhabung nur eingeschränkt Richtungsänderungen zu.

So sind beispielsweise seitliche oder diagonale geradlinige Bewegungen aus dem Stand nicht möglich. Das hat zur Folge, dass sich unter anderem die Muskelgruppen der Beinabduktoren zurückbilden. Diese sind wiederum mitverantwortlich für die Stabilisierung von Gangbewegungen und führen bei Rückbildung zu einem höheren Sturzrisiko.

Sogenannte Lenkrollen wie in DE102011080056B4, werden an allen Standard-rollatoren verwendet. Dabei können Diese starr oder freibeweglich in vertikaler Drehachse sein.

Bei Rückwärtsbewegungen, erweist sich die Richtungsführung als schwer kontrollierbar. Beobachtungen mit Standardrollatoren zeigten, dass einige Personen beim Rückwärtsgehen anhalten mussten und den Rollator neu positionieren bzw. ausrichten mussten. Eine seitwärts gerichtete Bewegung aus dem Stand ist bei Standardrollatoren mit zwei starren Rädern auf einer Achse nicht möglich. Bei Modellen mit vier freibeweglichen Rollen stößt jedoch der erste Bewegungsimpuls bei Bewegungen, in entgegengesetzter Richtung oft auf Widerstand. Das ist bedingt durch die Rotation über die vertikale Drehachse.

Das bisher verwendete Bremsprinzip über eine Stempelbremse ist bei vier freibeweglichen Rollen nicht mehr möglich, da der Bremsvorgang zuvor an den starren Rädern erfolgte.

Des Weiteren weist das Bremssystem herkömmlicher Rollatoren zumeist zwei unabhängig voneinander wirkende Stempelbremsen mit unterschiedlicher Bremswirkung auf. Dies kann dazu führen, dass beim Einsatz der Bremsen eine unterschiedliche Bremswirkung erzielt wird und der Rollator zu einer Seite hin abdriftet.

Des Weiteren gehen herkömmliche Bremssysteme immer mit dem Lösen des Haltegriffes einher, um eine Bremswirkung zu erzielen, wobei eine Hand einen Griff umfasst.

In DE202004019116U1 wird ein mobiles Hilfsmittel, wie beispielsweise ein Rollator mit einer Sitzfläche beschrieben, den eine Person vor sich herschieben kann und der einen Kollisionsschutz aufweist. Es wird eine Schutzeinrichtung zur Verhinderung von Sachschäden auf dem mobilen Hilfsmittel montiert. Dieses ist ein elastisches Gefüge, welches die harten Oberflächen des mobilen Hilfsmittels schützend umfasst und gegen Aufprall dämpft. Die Sitzfläche kann die Person nur benutzen, indem sie sich mit dem Rücken zu dem Rollator positioniert, was zu Stürzen führen kann. Die Person muss sich um 180° um ihre eigene Achse drehen.

Bekannt aus DE102008029564B4 ist eine Trainingsvorrichtung zum Aufbau der Muskulatur des Gehapparates mit einem Haltearm und einer neigbaren Stützvorrichtung.

In EP2926791A1 wird Rollator offenbart, der ein Gestell und ein bremsbares Rad aufweist, wobei das Rad nur dann blockiert wird, wenn eine vordefinierte Kraft auf das Gestell in Richtung eines Untergrunds ausgeübt wird.

Aus der US 2013/0181489 A1 und der US 2014/0084559 A1 ist jeweils ein Rollator bekannt, bei dem die Bremse durch Aufsitzen einer Person auf eine Sitzfläche festgestellt werden kann.

Mit der vorliegenden Erfindung sollen alle diese Nachteile ausgeräumt werden. Vor diesem Hintergrund besteht die Aufgabe der vorliegenden Erfindung in der Überwindung der aufgezeigten Nachteile.

Diese Aufgabe wird durch eine Vorrichtung nach Anspruch 1 gelöst, wobei weitere vorteilhafte Ausführungsformen aus den Unteransprüchen hervorgehen.

Vorgeschlagen wird Fortbewegungshilfe (1) für bewegungseingeschränkte Personen, die zumindest folgende Bestandteile umfasst: - einen Rahmen (1'), - Rahmenbeine (2), die an einem ersten Ende (2') mit dem Rahmen (V) in Verbindung stehen und an deren zweiten Ende (2") Kugelrollen (3) angeordnet sind, dadurch gekennzeichnet, dass - eine Hüftarretierung oder Lendenarretierung (8), die über einen Rückführungsmechanismus (7) in Form einer Federung und über eine Halterung (6) mit dem Rahmen (V) verbunden ist, - wobei die Hüftarretierung (8) unterstützt durch den Rückführungsmechanismus (7) beim Aufstehen der Person von einer sitzenden Position automatisch in eine Einrastposition rückführbar ist, in welche die Hüftarretierung in einer Ausgangsposition fixiert ist, - einen Sitz (9) mit einem integrierten Bremsauslösemechanismus wobei - der Sitz (9) bei Betätigung durch die Person beim Aufstehen derart mit der Hüftarretierung (8), dem Rückführungsmechanismus (7) und der Halterung (6) zusammenwirkt, dass der Bremsauslösemechanismus (5') auslösbar ist.

Die Fortbewegungshilfe zeichnet sich durch ihre Rahmenform und deren Dimension aus. Dadurch kann der Nutzer uneingeschränkte Bewegungen ausführen. Die Lenden- oder Hüftarretierung (8) dient der Person, eine aufrechte Körperhaltung einzunehmen sowie der sicheren Nutzung des Rollators bzw. der Fortbewegungshilfe. Die mit dem Sitz auslösbare Bremse, auch Bremsauslösemechanismus genannt, dient dem Nutzer zur Realisierung einer Pause oder zur Durchführung von Übungen im Sitzen und löst durch Einwirken der Gewichtskraft eine Bremswirkung auf die Kugelrollen (3) aus.

Beispielsweise bietet es den motorisch und /oder kognitiv eingeschränkten Personen die Möglichkeit, ihre körperlichen und geistigen Fähigkeiten zu trainieren, um so ihre Selbstständigkeit im Alltag zu erhalten.

Der Aufbau der Fortbewegungshilfe bietet eine Reihe von Vorteilen und vielfältige Kombinationsmöglichkeiten für Zusatzgeräte. Der Nutzer kann zentral im Rollator stehen und stützt sich auf die Unterarmstützen. Aus der durch die Hüftarretierung gesicherten zentralen Position des Nutzers und der kegelförmigen Rahmenform, resultiert eine geringe Kippgefahr für den Anwender.

Da Übungen auch in Gruppen stattfinden und somit mehrere Rollatoren bzw. Fortbewegungsmittel auf dem Bewegungsfeld sein können, kann ein Kollisionsschutz, vorzugsweise in Form eines Abstandshalters zwischen den einzelnen Rollatoren oder Fortbewegungsmitteln als Dämpfungssystem zum Schutz der äußersten Bauteile (1) vorgesehen werden. Auch Vorrichtungen für eine Trinkflasche sind möglich.

Untersuchungen haben gezeigt, dass Mechanismen für die Kollisionswarnungen keine praktikable Methode sind, Zusammenstöße mit Gegenständen oder anderen Geräten zu verhindern. Zum einen reagiert der Nutzer, aufgrund seines geistigen Defizites auf die weitergeleiteten Warnsignale zu langsam oder zum anderen können oft die Signale nicht direkt vom Nutzer interpretiert werden. Somit ist die Herangehensweise eines Kollisionsschutzes im Sinne eines Abstandshalters oder Dämpfungssystems der äußersten Bauteile eine wesentlich anwenderorientierte Herangehensweise.

Eine Ausführungsform der Erfindung sieht vor, dass die Rahmenbeine (2) höhenverstellbar sind.

Es kann beispielsweise eine automatische Anpassung des Rahmens an die Größe des Nutzers mittels einer blockierenden Gasfeder erfolgen, welche stufenlos in jede Hubposition verstellt werden kann. Die Höhenverstellung bietet gleichzeitig eine Anpassung an die Stützfläche des Rollators oder der Fortbewegungshilfe.

In einer Ausführungsform der Erfindung ist vorgesehen, dass die Fortbewegungshilfe Armstützen (4) aufweist, an denen Handgriffe (5) angeordnet sind, wobei die Armstützen (4) mit der Hüftarretierung (8) in Verbindung stehen. Diese Handgriffe können zudem horizontal verschiebbar sein um sie an die Unterarmlänge des jeweiligen Nutzers anzupassen

Es ist vorgesehen, dass der Rahmen der Fortbewegungshilfe (1) kegelförmig ausgebildet ist. Durch diese Kegelform und die zentrale Position des Nutzers in der Fortbewegungshilfe ist die Kippgefahr dieser sehr gering, da der Schwerpunkt nicht über den Rollator oder die Fortbewegungshilfe hinausgeht.

Eine Ausbildungsform der Erfindung sieht vor, dass die Hüftarretierung (8) der Fortbewegungshilfe (1) zumindest folgende Bestandteile umfasst:
- Adaptionsmittel (10), um den selbstadaptiven Arretierungsmechanismus der Hüftarretierung (8) auszulösen,
- Verbindungselemente (11) zwischen den Außenwänden der Hüftarretierung (8),
- eine nichtelastische Außenseite (12) der Hüftarretierung (8),
- einen manuellen Einstellmechanismus (13) zur Verkürzung der nichtelastische Außenseite (12),
- ein Verbindungselement (14) zwischen der Hüftarretierung (8) und der Federung (7) mit sogenannter "Lookfunktion",
wobei "B" einen Bereich kennzeichnet, in dem der Nutzer bzw. eine Person steht.

Die beschriebene Fortbewegungshilfe (1) kann als Sport-, Therapie- oder Tanzrollator aufgebaut und genutzt werden. Vorzugsweise kann der Rollator in Pflegeheimen, Krankenhäusern, Sanatorien, Sportstätten für Senioren und im Privatbereich, d.h. im Wohnbereich eingesetzt werden.

Damit können Menschen mit kognitiven Defiziten (MCI-, Demenzerkrankungen), häufig begleitet durch Bewegungseinschränkungen, ein bewegungsunterstützendes Sport- und Therapiegerät mit intuitiver Nutzersteuerung erhalten.

Die Erfindung bezieht sich auf ein bewegungsunterstützendes Gerät, welches besonders die Nutzung und den Gebrauch bei Bewegungsspielen und musikalischtherapeutischen Übungen ermöglicht.

Es handelt sich hierbei um eine bionisch-selbstadaptive Vorrichtung, z.B. mit intuitiver Nutzersteuerung, umfassend ein automatisches Sitzbremssystem, eine automatische Rahmenanpassung auf die Körpergröße, eine selbstadaptive Hüftarretierung, rückwirkungsfreie Kugelrollen mit Bremsfunktion, einen Kollisionsschutz, ein Bewegungstrackingsystem und einen platzsparenden Leichtbaurahmen.

Ziel der technischen Umsetzung ist es, die physischen Bedürfnisse der genannten Zielgruppe zu erfüllen. Bedürfnisse werden in einer unterschiedlichen Bedeutung von Produktattributen geäußert, wie bspw. dem Wunsch nach Sicherheit beim Umgang mit dem Gerät oder Gebrauch eines Bremssystems. Weiterhin dürfen weder eine Unter- noch Überforderung während der allgemeinen Benutzung des Sport- und Therapiegerätes hervorgerufen werden.

Während der Nutzung der erfindungsgemäßen Vorrichtung nimmt der Nutzer (P) eine aufrechtere Körperhaltung an. Hierbei befindet er sich durch die Unterarmstütze, die Handgriffposition und die Hüftarretierung in einer fixierten Position.

Weiterhin können Bewegungsrichtungen nicht nur über die Arme, sondern zusätzlich auch durch den Steuerimpuls des Oberkörpers, über die Hüftarretierung eingeleitet werden und somit für die Bewegungsausführung unterstützend wirken. Sicherheitsfunktionen, wie das Bremsen über eine Sitzbremse, können ausgeführt werden ohne diese aktiv zu bedienen. Lediglich die auf den Sitz wirkende Gewichtskraft bewirkt ein Blockieren der Kugelrollen.

Durch das Entfallen von Bremshebeln oder ähnlichen aktiven Mechanismen, muss die stabile Stützhaltung und der feste Haltegriff des Nutzers, für das aktivieren des Bremssystems, nicht gelöst werden. Dieses bietet wiederum ein hohes Maß an Bewegungskontrolle und Sicherheit für den Nutzer.

Weiterhin sollen selbstadaptive Einstellmechanismen dem Anwender die Anpassung an das Gerät erleichtern und Fehleinstellungen ausschließen.

Im Folgenden sind die Merkmale und Vorteile selbstadaptiver Techniklösungen für den erfindungsgemäßen Rollator näher beschrieben. Selbstadaptive Technik bedeutet:
- Automatische Rahmenanpassung,
- Selbstadaptive Hüftarretierung,
- Sitzbremssystem,
- Rückwirkungsfreie Kugelrollen mit Bremsfunktion,
- Bewegungstrackingsystem,
- Kollisionsschutz,
- Platzsparender Leichtbaurahmen.

### Funktionsweise der Lendenarretierung:

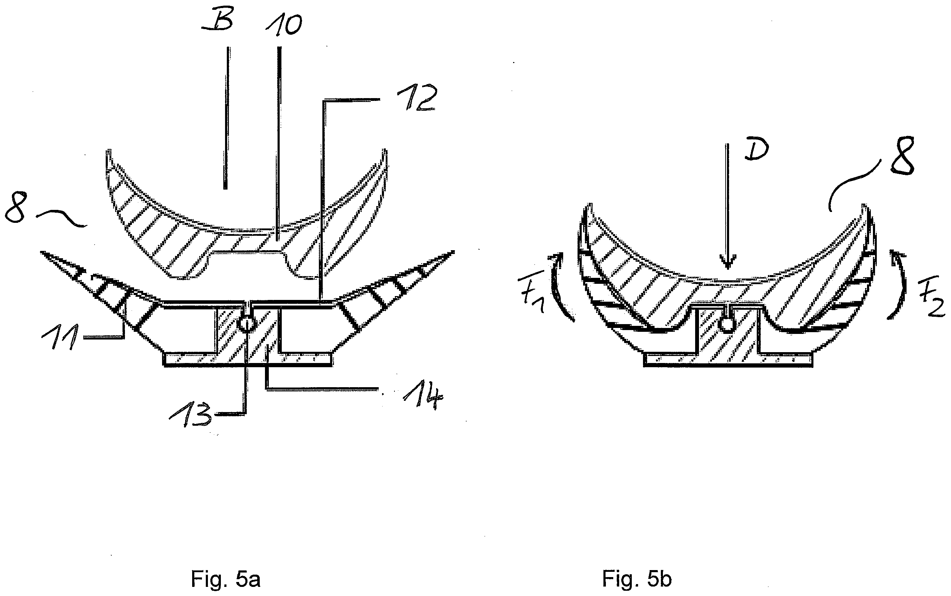

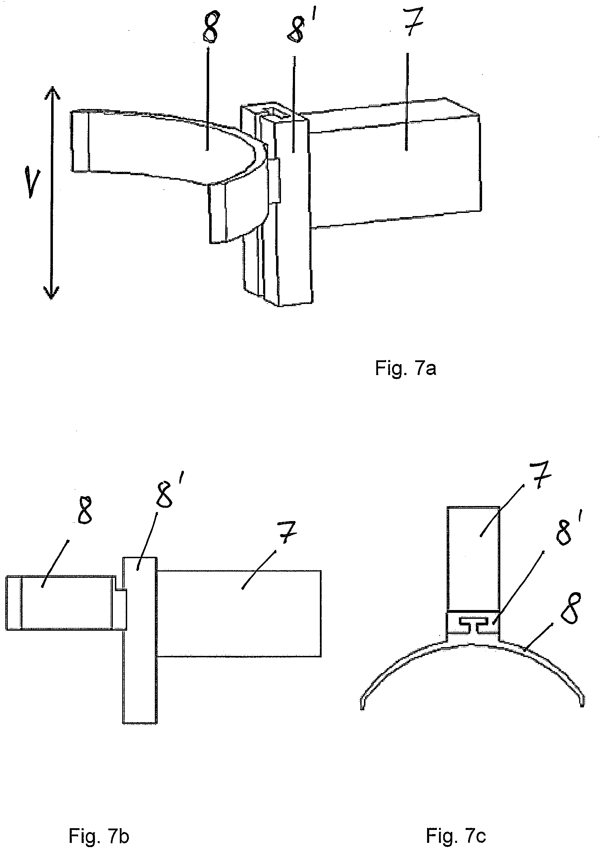

- Durch eine vertikale Führung des hüftumschließenden Bereiches (11) in den Fig. 5a oder Fig. 7a ist die Lendenarretierung in der Höhe variabel. So können die Auf- und Abbewegungen des Oberkörpers erfolgen, die durch das Beugen der Beine der Person aufgrund von größeren Schritten oder anderen Übungen hervorgerufen werden können.
- Die Fortbewegungshilfe kann nach vorn offen sein, d.h. für den Nutzer oder die Person frei zugänglich.
- Die Fortbewegungshilfe kann ebenso nach vorn geschlossen sein.
- der Einrastmechanismus fixiert die Hüftarretierung in der Ausgangsposition, wenn der Nutzer (P) im Rollator, so wirkt hier ein Sperrmechanismus bzw. eine Rückführungssperre;
- nachfolgend wird die Hüft- bzw. Lendenarretierung derart gelöst, dass sie sich nach hinten führen lässt und der Nutzer eine sitzende Position einnehmen kann, dabei dient die Lendenstütze oder Hüftarretierung (8) als Lehne.
- Die Lendenstütze bzw. Hüftarretierung (8) kann mit Vibrationselementen ausgestattet werden, um den Nutzer taktile Reizstimulationen wie Bewegungsrichtung oder Takt vorzugeben, d.h. als Rehabilitationsmaßnahme dienen.

### Funktionsweise der Sitzbremse:

- der Sitz kann aufgeklappt oder umgeklappt werden, beispielsweise kann er aus zwei Sitzhälften bestehen, die aufklappbar sind oder es kann von hinten eine Sitzfläche umgeklappt werden; ebenso können zwei Halbschalen in Verbindung mit einer Gewebefläche vorgesehen werden, die in der Rollatorrahmeninnenseiten angeordnet sind, diese beiden Halbschalen können nach unten geschwenkt werden, um somit die Gewebefläche als Sitz- und Lehnfläche aufgespannt wird;
- Ständige Sitzrolle zum Ausruhen auf 75-80% der normalen Gesäßhöhe, d.h. der Sitz befindet sich auf einer Höhe von ca. 75-80% zur Gesäßhöhe und dient kurzen Entspannungspausen, wobei die Normsitzhöhe für Übungen (herab- oder ausklappbar klappbar) bei ca. 45-60 cm liegt;
- die Sitzrolle kann in horizontaler Richtung verstellt werden, der Klappsitz ist ebenfalls anpassbar.
- der Bremsmechanismus wird über hydraulische Druckweiterleitung mittels Körpergewicht an die Rollen weitergeleitet. Dabei umschließt ein Ring die Rollen, dieser Ring verringert aufgrund der Druckerhöhung seinen Radius und verhindert die Rollenbewegung.
- Die Bremskraftweiterleitung kann auch über ein mechanisches Prinzip mittels Bowdenzug erfolgen.

### Prinzip der Bremswirkung auf die Kugelrollen:

- Die Kugelrollen sind mit einem im Umfang veränderbaren Ring umschlossen , welcher sich in seinem Durchmesser derartig ändern kann, dass daraufhin das Bewegen der Kugelrolle verhindert werden kann, wobei der Ring eine Bremskraft auf die Kugel bewirkt.
- Die Rollbewegung der Kugel kann über zwei Walzen auf zwei gelochte Segmentscheiben übertragen werden. Aus deren Drehrichtung und Geschwindigkeit werden über Inkrementalgeber mit kleinen Lichtschranken elektrische Impulse erzeugt. Die relativen Koordinaten der einzelnen Kugeln werden dann über einen Algorithmus ins Verhältnis zueinander gesetzt. Somit kann die Bewegung des Nutzers mit dem Rollator erfasst werden und nicht nur die einzelner Kugelrollen.

Mit der dargestellten Fortbewegungshilfe können bewegungseingeschränkte Personen regelmäßige sportliche Übungen durchführen, die nicht nur die Gefäßdurchblutung fördern, sondern zudem die Muskeln und die Festigkeit der Knochen stärken. Sie stimulieren zudem das Wachstum neuer Nervenzellen und können auch den kognitiven Leistungseinbußen im Alter entgegenwirken. Beispielhaft wird die Fortbewegungshilfe anhand von mehreren Figuren dargestellt, worauf die Erfindung jedoch nicht beschränkt ist.

Diese Figuren zeigen:
Figur 1: schematisch den Aufbau einer Fortbewegungshilfe (1) für bewegungseingeschränkte Personen in isometrischer Darstellung,
Fig. 2a und 2b: schematisch eine Rollatorposition mit einer Person im Stehen, 2a und im Sitzen, 2b in Seitenansicht,
Figur 3a - 3f: schematisch die Fortbewegungshilfe aus Fig. 1 in mehreren Ansichten,
Figur 4a - 4d: schematisch die Rahmenanpassung der Fortbewegungshilfe aus Fig. 1 an die Körpergröße einer Person in Seitenansicht (Fig. 4a und 4b) und die Höhenverstellung gemäß Fig. 4c und 4d,
Figur 5a, 5b: schematisch die Hüftarretierung in der Fortbewegungshilfe (1),
Figur 6a - 6d: schematisch die Zurückführen der Hüftarretierung während des Hinsetzens bei einer Person in die Fortbewegungshilfe (1) gemäß Fig. 1.
Fig. 7a: schematisch die Vertikalverschiebung der Hüftarretierung der Fortbewegungshilfe aus Fig. 1,
Fig. 7b: die Seitenansicht und in Fig. 7c eine Draufsicht der Fig. 7a,
Fig. 8: schematische Darstellung des Sitzbremsensystems der Fortbewegungshilfe aus Fig. 1,
Fig. 9 schematisch den Bremswirkungsmechanismus auf die Kugelrolle der Fortbewegungshilfe aus Fig. 1;
Fig. 10: schematisch ein Prinzip der optomechanischen Bewegungserfassung, angewendet bei der Kugelrolle der Vorrichtung (1) aus Fig. 1;

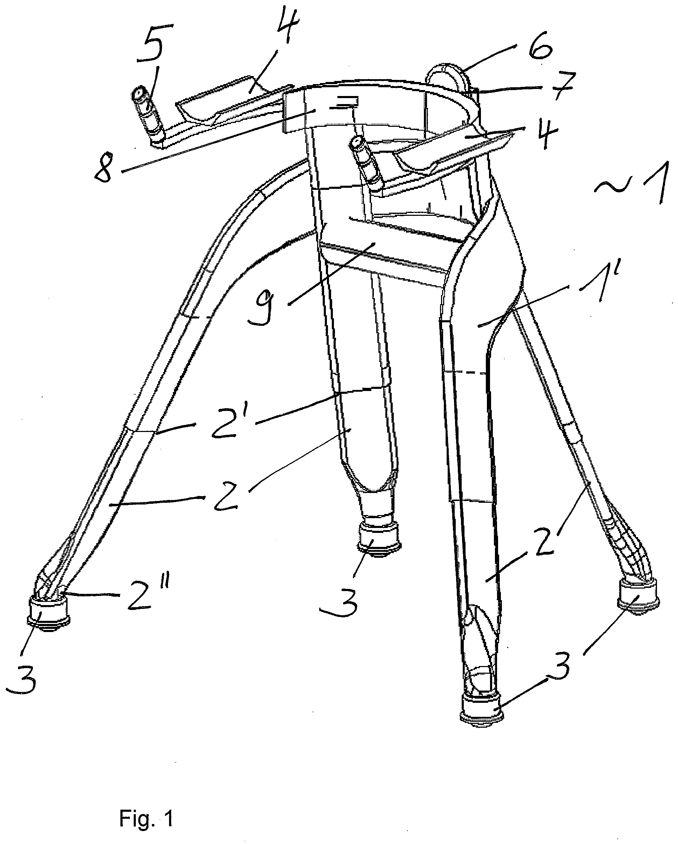

Figur 1 zeigt schematisch den Aufbau einer Fortbewegungshilfe (1) für bewegungseingeschränkte Personen in isometrischer Darstellung.

Die Fortbewegungshilfe 1 umfasst dabei zumindest einen Rahmen (1'), höhenverstellbare Rahmenbeine (2), die an einem Ende (2') mit dem Rahmen (1') in Verbindung stehen und am zweiten Ende (2") Kugelrollen (3) angeordnet sind, eine selbstadaptive Hüftarretierung oder Lendenarretierung (8), die über einen Rückführungsmechanismus (7) und eine Halterung (6) der Hüftarretierung mit dem Rahmen (1') verbunden ist, einen Sitz (9) mit einem integrierten Bremsauslösemechanismus, wobei der Sitz (9) bei Betätigung durch die Person derart mit der Hüftarretierung (8), der Federung (7) und der Halterung (6) zusammenwirkt, dass der Bremsauslösemechanismus auslöst wird.

Dabei ist der Rückführungsmechanismus mit einer sogenannten Lookfunktion für den Wechsel der Hüftarretierung vom Stehen zum Sitzen verantwortlich. Das Zurückführen der Hüftarretierung geschieht automatisch beim Aufrichten in eine stehende Position. Zudem sind Armstützen (4) mit Handgriffen (5) vorgesehen. Die Halterung (6) dient zur Aufnahme der für die Hüftarretierung relevanten Einrichtungen, d.h. für die Hüftarretierung (8) und den Rückführungsmechanismus (7).

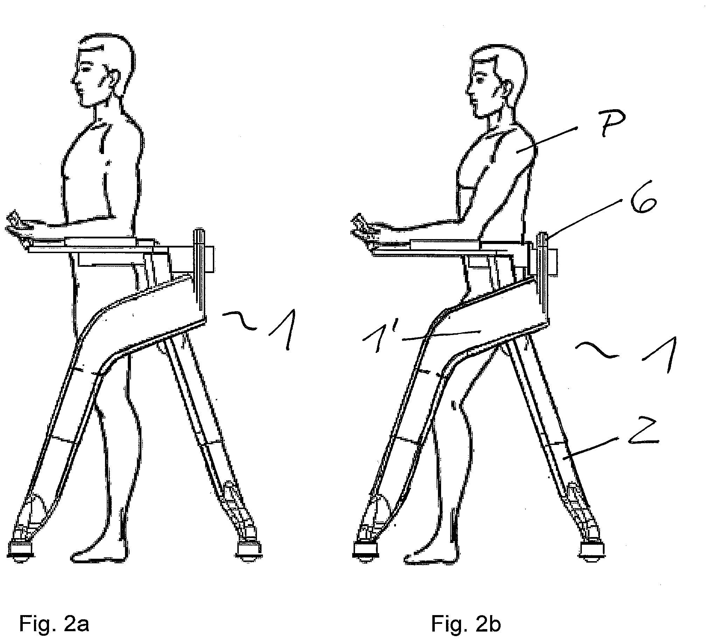

Fig. 2a und 2b zeigen schematisch eine Rollatorposition mit einer Person (P) im Stehen, 2a und im Sitzen 2b, gemäß Fig. 1 in Seitenansicht.

### Automatische Rahmenanpassung:

Ein Anpassen an die Körpergröße ist unumgänglich, um einen richtigen, sicheren sowie effektiven Gebrauch des Gerätes zu garantieren. Jedoch ist die Höheneinstellung bisher in bekannten Fortbewegungshilfen sehr aufwändig und muss meist von mindestens einer weiteren Person durchgeführt werden.

Der Anspruch an die automatische Anpassung des Rahmens an die Größe des Nutzers, soll daher über ein Verstellsystem erfolgen, welches alle vier Rahmenbeine (2) mit einer blockierenden Gasfeder, stufenlos in jede Hubposition verstellt. Dies ist sowohl elastisch, d.h. also nachfedernd als auch starr möglich. Es kann auch über einen mechanischen Arretierungsmechanismus erfolgen, wie beispielsweise eine Verriegelung durch Sperrbolzen in dafür vorgesehenen Bohrungen mit entsprechenden Abständen oder mittels stufenloser Verstellung durch Rohrspanner, welche die Rollatorbeine (2) auf eine gewünschte Höhe fixieren.

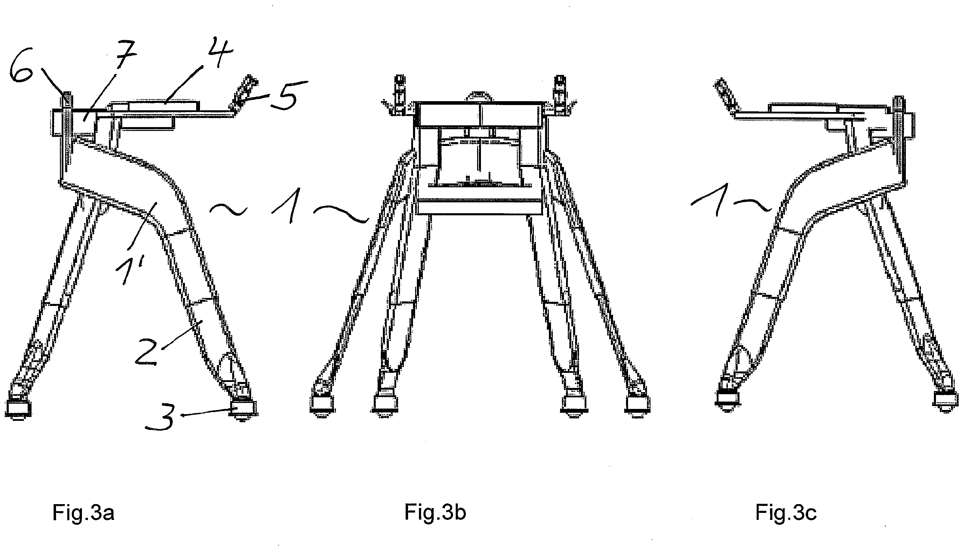

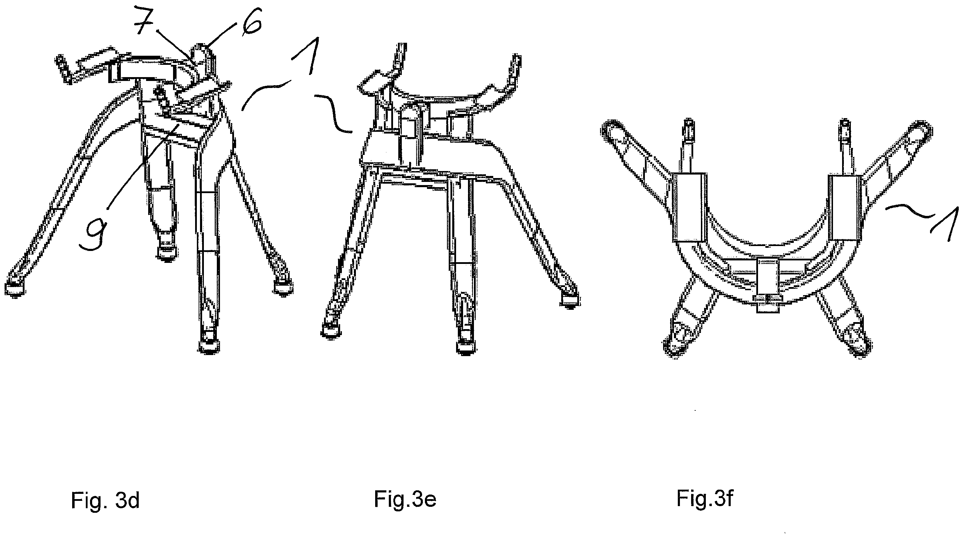

Die Figuren 3a - 3f zeigen verschiedene Ansichten der Fortbewegungshilfe 1.

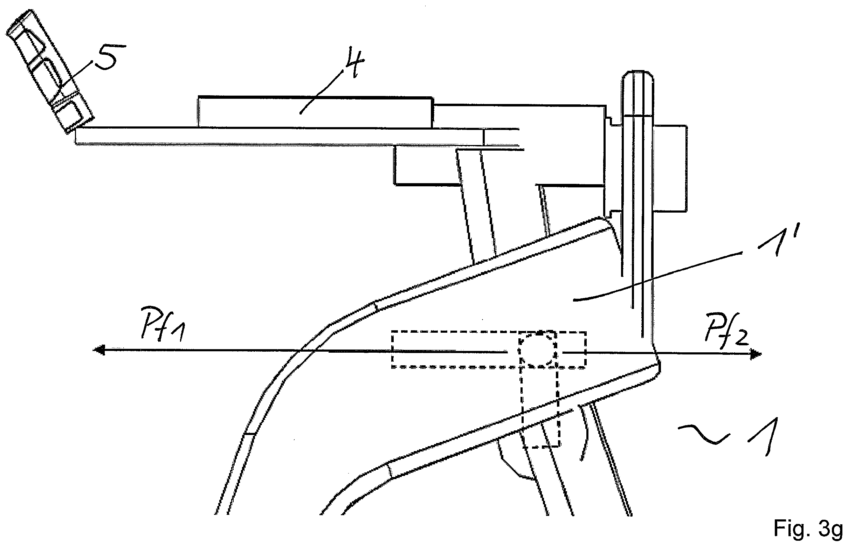

Die schematische Darstellung der Sitzposition, die in horizontaler Ebene in Pfeilrichtung (Pf₁) und (Pf₂) verläuft, wird in Fig. 3g dargestellt, wobei verdeutlicht ist, dass der Sitz (9), in horizontaler Ebene verschoben werden kann, um den Abstand des Sitzes (9) zum Nutzer (P) zu vergrößern oder zu verringern. Eine Anpassung an die Höhe erfolgt über die Rahmeneinstellung.

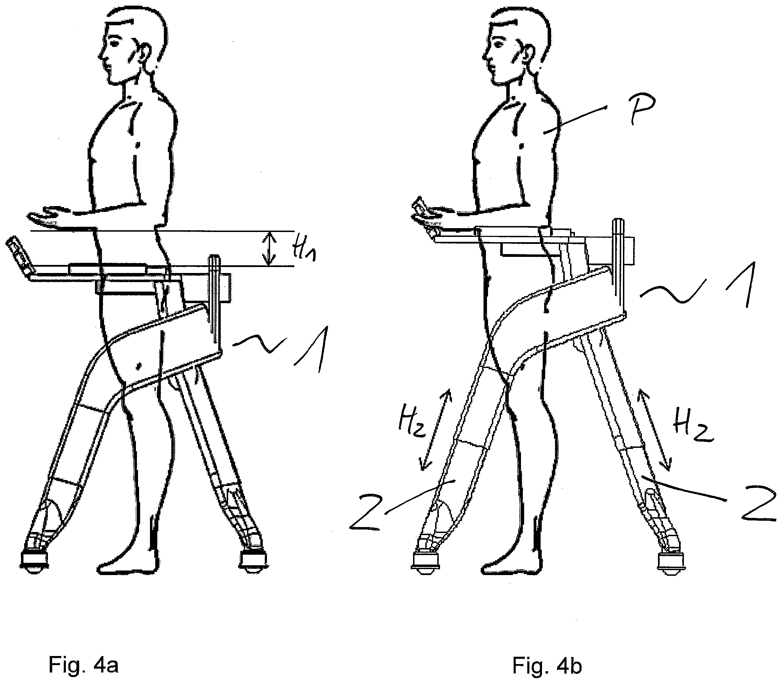

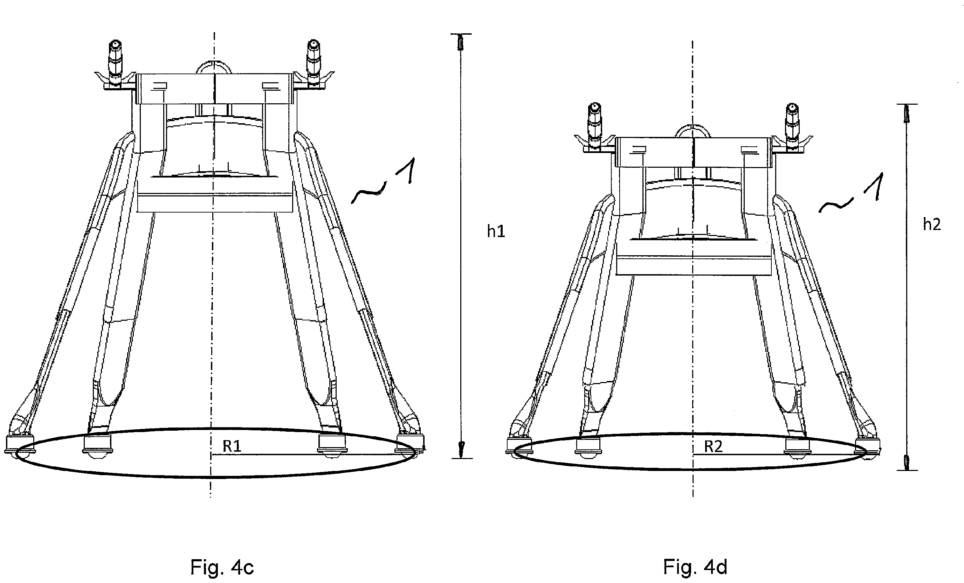

Figur 4a und 4b zeigen schematisch die Rahmenanpassung der Fortbewegungshilfe aus Fig. 1 an die Körpergröße einer Person (P) mittels der höhenverstellbaren Beine (2) in Seitenansicht, wobei die Höhenverstellung gemäß Figur 4c mit einer ersten Höhe (H₁) und mit einem ersten Radius (R₁) und einer zweiten Höhe (H₂) mit einem zweiten Radius (R₂) gemäß Fig. 4d erfolgen kann.

Während der Höhenverstellung über die vier seitlichen Rohrprofile verändert sich nicht nur die Höhe, sondern auch gleichzeitig erfolgt eine Anpassung der Unterstützungsfläche sowie des Bewegungsraumes, wie in den Figuren 4c und 4d dargestellt.

Dabei ist die Anordnung und Schrägstellung der Beine der Fortbewegungshilfe so gestaltet, dass es nicht zum Kippen der Fortbewegungshilfe und somit zum Sturz des Nutzers kommen kann, selbst wenn der Schwerpunkt der Fortbewegungshilfe bzw. des Rollators in einer bestimmten Höhe über die Unterstützungfläche hinaus gelangt.

In Fig. 5a und 5b wird schematisch die Hüftarretierung in der Fortbewegungshilfe (1) dargestellt.

Die Hüftarretierung (8) der Fortbewegungshilfe (1) umfasst dabei zumindest folgende Bestandteile:
- Adaptionsmittel (10), um den selbstadaptiven Arretierungsmechanismus der Hüftarretierung (8) auszulösen,
- Verbindungselemente (11) zwischen den Außenwänden der Hüftarretierung (8),
- eine nichtelastische Außenseite (12) der Hüftarretierung (8),
- einen manuellen Einstellmechanismus (13) zur Verkürzung der nichtelastische Außenseite (12),
- ein Verbindungselement (14) zwischen der Hüftarretierung (8) und der Federung (7) mit "Lookfunktion",
- wobei "B" einen Bereich kennzeichnet, in dem der Nutzer bzw. eine Person (P) steht, wie in Fig. 5a dargestellt.

Dabei wird eine entsprechende Einrichtung, beispielsweise in Form des Adaptionsmittels (10), die sich an der Innenseite der Hüftarretierung befindet oder direkt im Lendenbereich des Nutzers angebracht ist, an eine flügelartige Konstruktion gefügt, welche sich durch die Einwirkung von Druck (D) um den Körper der Person (P) entsprechend des Körperumfanges halbkreisförmig legt, gekennzeichnet durch die Pfeile (F₁) und (F₂) und somit horizontal arretiert, wie in Fig. 5b dargestellt.

Bedingt durch ein unterarmgestütztes Verhalten und der Arretierung im Hüft- und Lendenbereich, werden Übungen in aufrechter Körperhaltung durchgeführt und eine zentrale Position für eine uneingeschränkte Bewegung mit dem Rollator (1) gewährleistet.

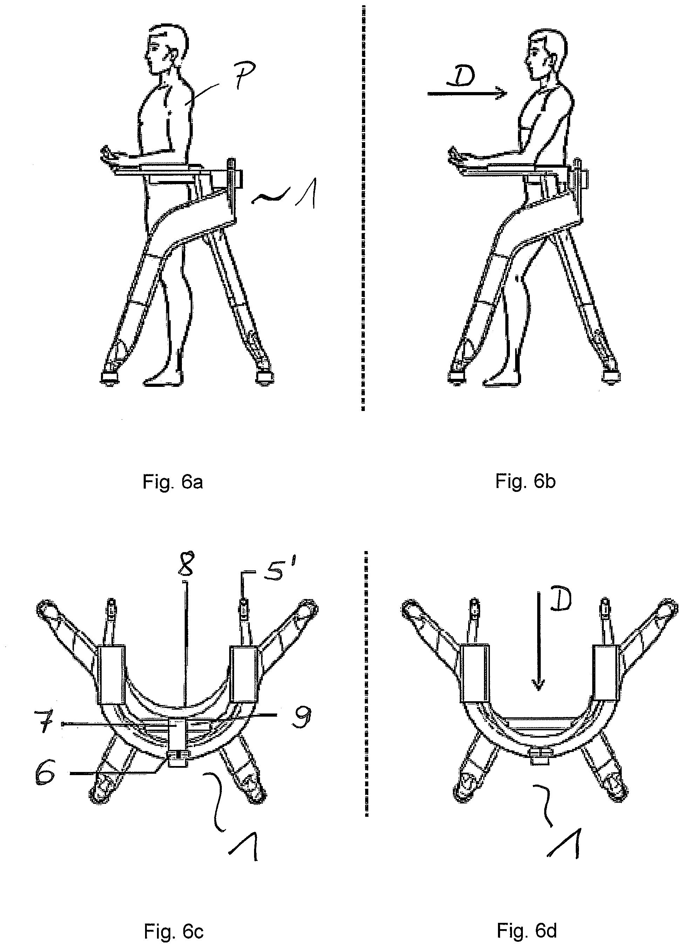

Die Figuren 6a - 6d zeigen schematisch die Rückführen der Hüftarretierung (8) vor dem Hinsetzen (Fig. 6a, Fig. 6c), während des Hinsetzens oder beim Sitzen (P) Fig. 6b und 6d, sowie die Änderung der Einstellung der Rollatorposition in den Fig. 6c und 6d. Der Rollator (1) umfasst folgende Bestandteile:
- selbstadaptive Hüftarretierung (8)
- horizontal rückführbarer Federmechanismus (7)
- Halterung für Hüftarretierung (6)
- Sitz mit integriertem Bremsauslösemechanismus (9)
- Auslösemechanismus mit Entriegelung (5')

Folgende Vorteile ergeben sich aus dieser Anordnung:
- Vertikalbewegung des Oberkörpers sind trotz Fixierung möglich;
- Positionierung des Nutzers erfolgt über die Seiten und den unteren Rückenbereich;
- der Rollator (1) ist nach vorne hin vorzugsweise offen, um ein leichtes Ein- und Aussteigen zu ermöglichen;
- er verfügt über eine starre Vorrichtung, für eine bessere Kraftübertragung;
- Mechanismus der Hüftarretierung während des Hinsetzens.

Bei Beanspruchung im Stehen gemäß Fig. 6a, 6c:
- Ist die Feder gemäß Fig. 6c entspannt;
- Eine nach hinten gerichtete Bewegung der Lendenstütze ist nicht möglich (eingerasteter Zustand);
- Die Position der Lendenstütze gemäß Fig. 6a lässt nur Bewegungen der Person (P) in vertikaler Richtung zu;
- Um sich hinsetzten zu können, muss die Feststellung bzw. der Sperrmechanismus der Feder an der Hüftarretierung gelöst werden. Dies kann über einen Auslösemechanismus (5') am Haltegriff gemäß Fig. 6c geschehen.

Bei Beanspruchung im Sitzen gemäß Fig. 6b, 6d:
- Durch die Druckausübung des Oberkörpers nach hinten in Pfeilrichtung (D), wird die Feder gemäß Fig. 6b gestaucht
- Da die Lendenstütze in vertikaler Richtung beweglich ist, wird diese während des Hinsetzens mit nach unten geführt und bietet somit eine Lehne für den Rückenbereich während des Sitzens.
- Eine Hüftarretierung während des entspannten Zustands gemäß Fig. 6c und während des gespannten Zustand gemäß Fig. 6d.

Durch das gewählte Sitzbremssystem bietet der Sitz keine komplette Sitzfläche und befindet sich dazu in einer Höhe von ca. 75-80%, in Bezug zur Standhöhe des Gesäßes. Daraus ergeben sich zwei wesentliche Vorteile zu einem herkömmlichen Sitz in entsprechender Standardsitzhöhe, d.h. ca. 50% in Bezug zur Höhe des Gesäßes während des Stehens. Dieses sind:
Vorteilhafter Weise kommt der Nutzer leichter in die entlastende Ruheposition und zudem benötigt er weniger Kraft beim Aufrichten, als bei einer Standardsitzhöhe. Dieser Vorteil ist insbesondere für die Anwendung im Spielbereich von hoher Bedeutung, da während der Phasen der passiven Spielbeteiligung eine kraftschonende und sichere Position eingenommen werden kann und bei aktiver Spielteilnahme wieder schnell eine aufrechte und spielbereite Körperhaltung zur Verfügung steht.

Zudem wurde festgestellt, dass besonders während der therapeutischen Übungen im Sitzen die höhergelegene Sitzposition mehr Spielraum mit den oberen Extremitäten erlaubt. Die oberen Extremitäten wären sonst bei einer normalen Standardsitzhöhe stark eingeschränkt.

### Funktionsweise der Hüftarretierung:

Während der Ausführung der Bewegungen im Stehen, berührt das Gesäß bzw. die Beine nicht den Sitz, da die Hüftarretierung den Nutzer in endsprechender Position auf Abstand zum Sitz hält. Während des Hinsetzens wird über einen Druccknopf am Handgriff der Sicherungsmechanismus (Blockierung) gelöst, welcher während der Anwendung im Stehen verhindert, dass die Hüftarretierung nach hinten federt.

Fig. 7a zeigt schematisch die Vertikalverschiebung der Hüftarretierung der Fortbewegungshilfe aus Fig. 1 mit zumindest folgenden Bestandteilen:
- Hüftarretierung (8)
- Führungselement für Vertikalverschiebung (8') in Pfeilrichtung (V)
- Horizontal rückführbarer Federmechanismus (7)

In Fig. 7b wird die Seitenansicht und in Fig. 7c eine Draufsicht der Fig. 7a gezeigt.

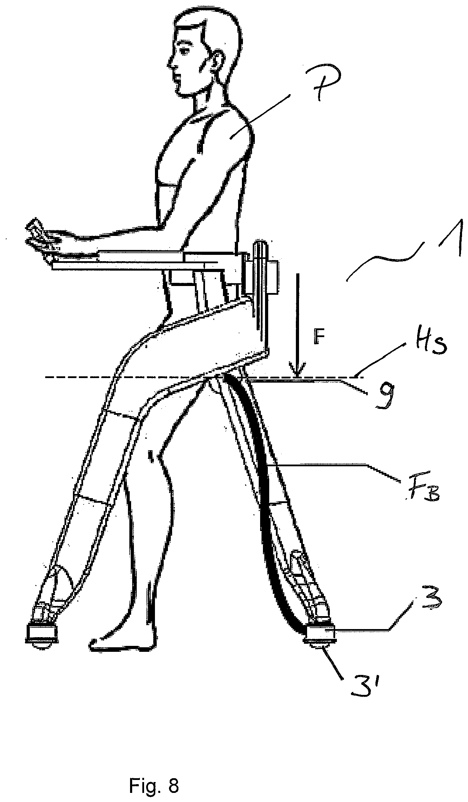

Fig. 8 zeigt eine schematische Darstellung des Sitzbremsensystems der Fortbewegungshilfe aus Fig. 1 mit zumindest folgenden Bestandteilen:
- Sitz (9) mit integriertem Bremsauslösemechanismus, dargestellt als Sitzhöhe (Hs)
- Bremskraftweiterleitung (F_{B})
- Kugelrolle mit Bremse (3)
- Kugel (3')

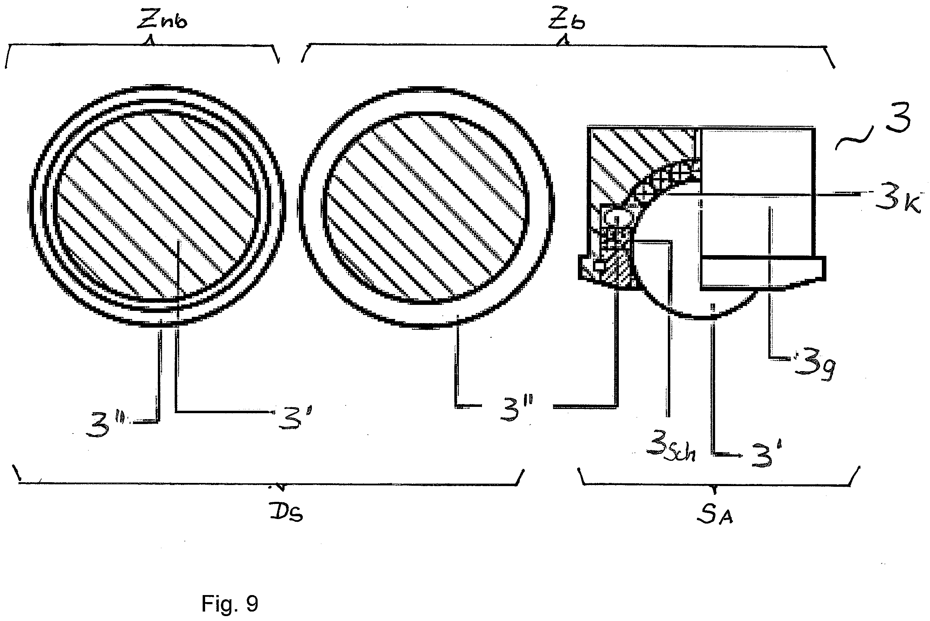

In Fig. 9 wird der Bremswirkungsmechanismus auf die Kugelrolle dargestellt.

Der Bremsimpuls wird erreicht, in dem sich der Nutzer (P) mit seinem Körpergewicht auf den Sitz setzt. Dabei wird ein Mechanismus innerhalb oder außerhalb des Sitzes beansprucht, welcher einen Stoff in Form von Luft oder einer hydraulischen Flüssigkeit komprimiert und weiterleitet.

Die Bremswirkung verläuft wie folgt:
Über Bremsschläuche wird der so endstehende Druck (F) auf die Bremsringe, welche sich um die Kugelrollen befinden, weiterleitet. Der Druck erzielt eine Verringerung des Durchmessers der einzelnen Bremsringe und führt zu einem Abbremsen der Kugeln.

Aufbau der Kugelrolle mit Bremse im nicht gebremsten Zustand (Z_{nb}) und im gebremsten Zustand (Z_{b}) in Draufsicht (Dₛ) und Seitenansicht (Sₐ).

Die Einrichtung, einschließlich der Kugelrolle mit Bremse, weist zumindest folgende Bestandteile auf:
- Kugelrolle mit Bremse (3)
- Kugel (3')
- Bremsring (3")
- Gehäuse von Kugelrolle (3_{g})
- Dichtring gegen Schmutz (3_{Sch})
- Kugellager (3_{K})

Somit besitzt die Fortbewegungshilfe (1) vier Kugelrollen, welche sich in alle Bewegungsrichtungen, wie bspw. vorwärts, seitwärts, diagonal, rückwärts und auf Kreisbahnen bewegen lassen. Dadurch können alle zuvor genannten Probleme mit diesem Rollator gelöst werden.

Das Anwendungsgebiet des neuen Rollators im Sport-, Tanz- und Rehabereich liegt in Sporthallen oder klinischen Einrichtungen, wobei die Fortbewegungshilfe vorzugsweise auf ebenen Untergründen, wie bspw. Parkett- oder Linoleumböden betreibbar ist. Für nicht allzu stark eingeschränkte Personen ist die Nutzung des Rollators auch auf Untergründe möglich, welche Fugen oder starke Unebenheiten aufweisen, bspw. auf Teppich, Fliesen oder Rasen.

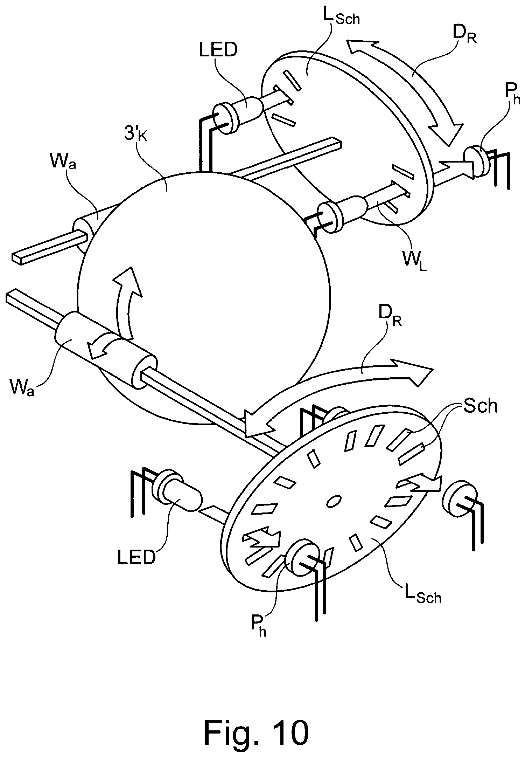

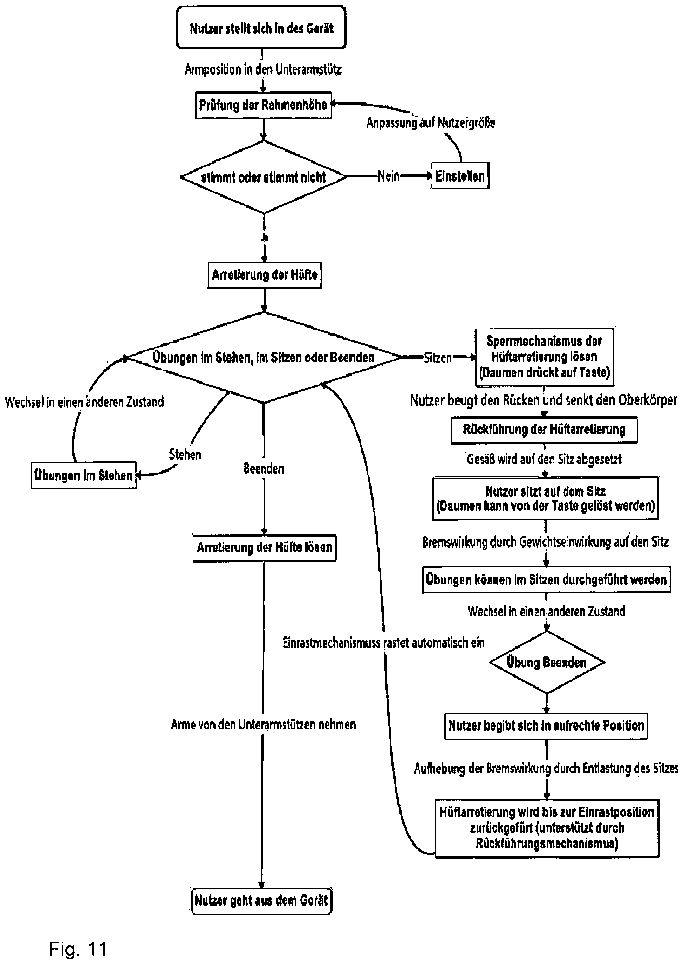

In Fig. 10 wird das Prinzip einer optomechanischen Bewegungserfassung [www.losbuenos.ch/ct2/Eingabegeraete/DOCS/Posten1-4_01b_V4.doc] bei der Kugelrolle (3'_{K}) der Vorrichtung aus Fig. 1 angewendet und schematisch gezeigt. Der Rollator bzw. die Rolle kann auch mit einem Bewegungstrackingsystem gekoppelt werden, um eine optomechanische Bewegungserfassung vornehmen zu können.

Bei der optomechanischen Bewegungserfassung handelt es sich um die Erfassung der Rollatorbewegungen, welche beispielsweise über vier Kugelrollen (3'_{K}), jeweilige Lochscheiben (L_{Sch}) und zugehörige Lichtschranken in elektrische Signale umgewandelt werden. Die Rollbewegung der Kugel (3'_{K}) wird über zwei Walzen (Wa) auf zwei gelochte bzw. mit Schlitzen (Sch) für den Durchlass von Licht, mit dem Lichtweg (W_{L}), versehene Segmentscheiben (L_{Sch}) übertragen, aus deren Drehrichtung (D_{R}) und Geschwindigkeit über Inkrementalgeber mit kleinen Lichtschranken elektrische Impulse erzeugt werden. Verwendet werden können beispielsweise LED's (LED) in Verbindung mit Phototransistoren (Ph). Die relativen Koordinaten der einzelnen Kugeln werden dann über einen Algorithmus ins Verhältnis zueinander gesetzt. Somit kann die Bewegung des Nutzers mit dem Rollator und nicht nur die einzelne Kugelrolle erfasst werden.

Dies ermöglicht die Darstellung von Bewegungsverläufen hinsichtlich der Bewegungsgenauigkeit, des zurückgelegten Weges oder auch einer gesamten Durchführung, eingeschlossen sind Beschleunigungs- und Geschwindigkeitswerte. Diese beispielhaft aufgelisteten Parameter ermöglichen eine therapeutische als auch leistungsdiagnostische Auswertung.

Die Hüftarretierung und die einhergehende Positionsarretierung des Nutzers, soll über einen selbstadaptiven Einstellmechanismus erfolgen. Durch adaptive Verformung bzw. Anpassung der Hüftarretierung ist eine gleichmäßige Druckverteilung auf die Hüfte gegeben. Dabei muss weder der Therapeut noch der Nutzer eine Einstellung vornehmen. Dadurch wird nicht nur der Einstellungsaufwand verringert, sondern auch eine Fehleinstellung vermieden.

Im Anwendungsbereich Gymnastik und Tanz kann die erfindungsgemäße Fortbewegungshilfe folgende Merkmale und Vorteile aufweisen:
- Einfache Positionsarretierung im Lendenbereich;
- Stützfunktion für die Unterarme;
- In 10 Stufen höhenverstellbare Rollatorbeine;
- Vier freibewegliche Rollen;
- Feststellbremse an allen vier Rollen.

Um Personen, die diesen Rollator nutzen wollen, einen Bewegungsrichtungsimpuls vermitteln zu können, ist eine Kombination des Rollators (1) mit einem taktilen Stimulationssystem über einen Vibrationsgürtel möglich.

### Wirkungsweise des taktiles Stimulationssystems über Vibrationsgürtel:

- Bereitstellung von zumindest vier, vorzugsweise acht Vibrationselementen, welche kreisförmig um den Nutzer (P) mit Hilfe eines Gürtels angelegt werden;
- die Vibrationselemente sollten einzeln ansteuerbar sein, um Richtung und Bewegungsform, beispielsweise einer Richtung oder Drehung zu übermitteln;
- die Information der Ansteuerung der einzelnen Elemente erfolgt vorzugsweise über Funksignale;
- die Informationsgebung erfolgt über eine Bewegungserfassung einer Person, beispielsweise eines Trainers, die den Übenden (P) die beabsichtigten Bewegungen bzw. Übungen zeigt oder im weiteren Therapieverlauf über eine App, die vom Therapeuten bedient werden kann.

Der Prozessablauf der taktilen Stimulation über einen Vibrationsgürtel kann zum einen, durch einen Therapeuten (a), der die Übung demonstriert oder wie im Fall (b) gezeigt, durch die Bedienung eines Gerätes seitens des Therapeuten erfolgen und sich wie folgt gestalten:

### Schritt 1: Signalerkennung

(a) Die Bewegungsvorgabe erfolgt durch den Therapeuten, indem er die Übungen zeigt. Hierbei trägt der Therapeut beispielsweise einen Beschleunigungssensor an seinem Körper, welcher die jeweilige Bewegungsrichtung registriert und überträgt.
(b) Die Bewegungsvorgabe erfolgt durch den Therapeuten, indem er ein Gerät bedient, wobei er beispielsweise eine Applikation (App) nutzen könnte, mittels derer der Therapeut über eine Touchfunktion die Richtung der Bewegung dem Lernenden vorgeben kann.

### Schritt 2: Signalweiterleitung

Die Signalweiterleitung kann sowohl im Fall (a) als auch im Fall (b) über Funk erfolgen, beispielsweise mittels WLAN oder Bluetooth.

### Schritt 3: Signalverarbeitung

Die Signalverarbeitung kann in beiden Fällen über den Vibrationsgürtel erfolgen, indem dieser die Richtung der Bewegung durch entsprechendes Ansteuern der Vibrationselemente vorgibt.

Der Gebrauch der Fortbewegungshilfe (Rollator) kann wie nachfolgend beschrieben erfolgen:

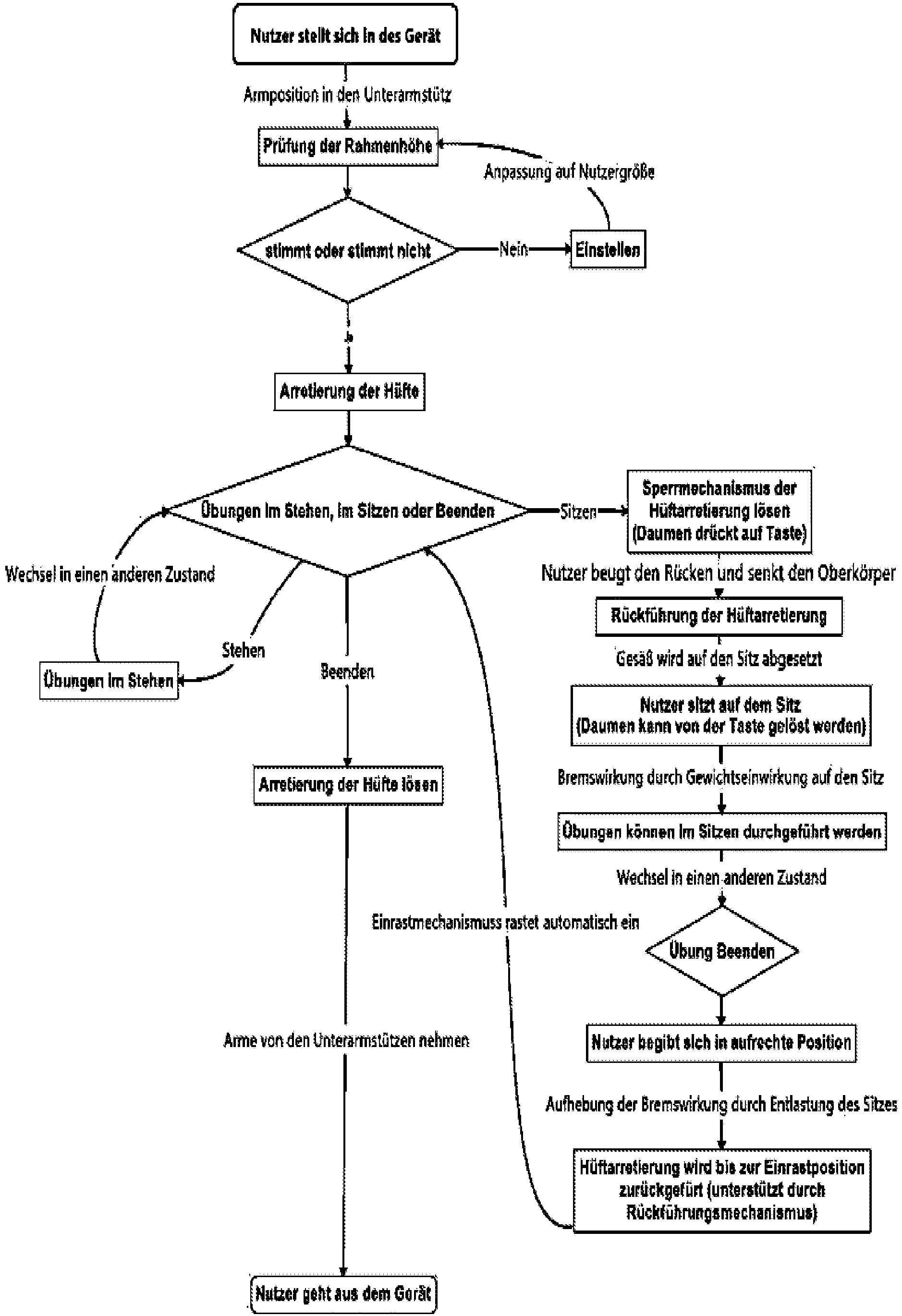

## Patentansprüche

1. Fortbewegungshilfe (1) für bewegungseingeschränkte Personen, die zumindest folgende Bestandteile umfasst:
- einen Rahmen (1'),
- Rahmenbeine (2), die an einem ersten Ende (2') mit dem Rahmen (V) in Verbindung stehen und an deren zweiten Ende (2") Kugelrollen (3) angeordnet sind, durch gekennzeichnet, dass
- eine Hüftarretierung oder Lendenarretierung (8), die über einen Rückführungsmechanismus (7) in Form einer Federung und über eine Halterung (6) mit dem Rahmen (V) verbunden ist,
- wobei die Hüftarretierung (8) unterstützt durch den Rückführungsmechanismus (7) beim Aufstehen der Person von einer sitzenden Position automatisch in eine Einrastposition rückführbar ist in welche die Hüftarretierung in einer Ausgangsposition fixiert ist,
- einen Sitz (9) mit einem integrierten Bremsauslösemechanismus wobei
- der Sitz (9) bei Betätigung durch die Person beim Aufstehen derart mit der Hüftarretierung (8), dem Rückführungsmechanismus (7) und der Halterung (6) zusammenwirkt, dass der Bremsauslösemechanismus (5') auslösbar ist.

2. Fortbewegungshilfe (1) nach Anspruch 1, **dadurch gekennzeichnet, dass** die Rahmenbeine (2) höhenverstellbar sind.

3. Fortbewegungshilfe (1) nach Anspruch 1 oder 2, **dadurch gekennzeichnet, dass** Armstützen (4) vorgesehen sind, an denen Handgriffe (5) angeordnet sind, wobei die Armstützen (4) mit der Hüftarretierung (8) in Verbindung stehen.

4. Fortbewegungshilfe (1) nach einem der vorhergehenden Ansprüche, wobei der Rahmen der Fortbewegungshilfe (1) kegelförmig ausgebildet ist.

5. Fortbewegungshilfe (1) nach einem der vorhergehenden Ansprüche, wobei ein Kollisionsschutz, vorzugsweise in Form eines Abstandshalters vorgesehen ist.

6. Fortbewegungshilfe (1) nach einem der vorhergehenden Ansprüche, die Hüftarretierung (8) der Fortbewegungshilfe (1) zumindest folgende Bestandteile umfasst:
- Adaptionsmittel (10), zum Auslösen eines selbstadaptiven Arretierungsmechanismus der Hüftarretierung (8),
- Verbindungselemente (11) zwischen den Außenwänden der Hüftarretierung (8),
- eine nichtelastische Außenseite (12) der Hüftarretierung (8),
- einen manuellen Einstellmechanismus (13) zur Verkürzung der nichtelastische Außenseite (12),
- ein Verbindungselement (14) zwischen der Hüftarretierung (8) und der Federung (7) mit Lookfunktion.

7. Fortbewegungshilfe (1) nach einem der vorhergehenden Ansprüche, **dadurch gekennzeichnet, dass** die Fortbewegungshilfe als Sport-, Therapie- oder Tanzrollator in Pflegeheimen, Krankenhäusern, Sanatorien, Sportstätten für Senioren und im Privatbereich, vorzugsweise im Wohnbereich, ausgebildet ist.

## Claims

1. Mobility aid (1) for persons with limited mobility, comprising at least the following components:
- a frame (1'),
- Frame legs (2) which are connected to the frame (V) at a first end (2') and at whose second end (2") ball rollers (3) are arranged, **characterized in that**,
- a hip lock or lumbar lock (8), which is connected to the frame (V) via a return mechanism (7) in the form of a spring and via a holder (6)
- wherein the hip lock (8), supported by the return mechanism (7), can be automatically returned from a seated position to an engaged position when the person stands up, in which the hip lock is fixed in an initial position,
- a seat (9) with an integrated brake release mechanism, wherein
- the seat (9), when actuated by the person standing up, interacts with the hip lock (8), the return mechanism (7) and the holder (6) in such a way that the brake release mechanism (5') can be triggered.

2. Locomotion aid (1) according to claim 1, **characterized in that** the frame legs (2) are adjustable in height.

3. Locomotion aid (1) according to claim 1 or 2, **characterized in that** arm supports (4) are provided on which handles (5) are arranged, the arm supports (4) being connected to the hip lock (8).

4. Locomotion aid (1) according to one of the preceding claims, the frame of the locomotion aid (1) being conical.

5. Locomotion aid (1) according to one of the preceding claims, wherein a collision protection, preferably in the form of a spacer, is provided.

6. Locomotion aid (1) according to one of the preceding claims, the hip lock (8) of the locomotion aid (1) comprising at least the following components:
- Adaptation means (10), for triggering a self-adaptive locking mechanism of the hip lock (8),
- Connecting elements (11) between the outer walls of the hip lock (8),
- a non-elastic outer side (12) of the hip lock (8),
- a manual adjustment mechanism (13) for shortening the non-elastic outer side (12),
- a connecting element (14) between the hip lock (8) and the suspension (7) with look function.

7. Locomotion aid (1) according to one of the preceding claims, **characterized in that** the locomotion aid is designed as a sports, therapy or dance rollator in nursing homes, hospitals, sanatoriums, sports facilities for senior citizens and in the private sector, preferably in the living area.

## Revendications

1. Aide à la locomotion (1) pour les personnes à locomotion réduite, comprenant au moins les composants suivants :
- un cadre (1'),
- des pieds de cadre (2) qui sont reliés au cadre (1') à une première extrémité (2') et à la deuxième extrémité (2") desquels sont disposés des roulettes à billes (3),
**caractérisée par**
- un moyen d'arrêt de hanche ou un moyen d'arrêt lombaire (8) relié au cadre (1') par un mécanisme de rappel (7) sous la forme d'une suspension et par un support (6),
- dans lequel, en étant soutenu par le mécanisme de rappel (7) lorsque la personne se lève depuis une position assise, le moyen d'arrêt de hanche (8) peut être retourné automatiquement dans une position d'enclenchement dans laquelle le moyen d'arrêt de hanche est fixé dans une position initiale,
- un siège (9) comportant un mécanisme intégré de déclenchement de frein,
- le siège (9), lorsqu'il est actionné par la personne qui se lève, coopère avec le moyen d'arrêt de hanche (8), le mécanisme de rappel (7) et le support (6) de telle sorte que le mécanisme de déclenchement de frein (5') peut être déclenché.

2. Aide à la locomotion (1) selon la revendication 1, **caractérisée en ce que** les pieds de cadre (2) sont réglables en hauteur.

3. Aide à la locomotion (1) selon la revendication 1 ou 2, **caractérisée en ce qu'**il est prévu des accoudoirs (4) sur lesquels sont disposées des poignées (5), les accoudoirs (4) étant reliés au moyen d'arrêt de hanche (8).

4. Aide à la locomotion (1) selon l'une des revendications précédentes, dans laquelle le cadre de l'aide à la locomotion (1) est réalisé en forme conique.

5. Aide à la locomotion (1) selon l'une des revendications précédentes, dans laquelle il est prévu une protection contre les collisions, de préférence sous la forme d'un élément écarteur.

6. Aide à la locomotion (1) selon l'une des revendications précédentes, dans lequel le moyen d'arrêt de hanche (8) de l'aide à la locomotion (1) comprend au moins les composants suivants :
- des moyens d'adaptation (10) pour déclencher un mécanisme d'arrêt auto-adaptatif du moyen d'arrêt de hanche (8),
- des éléments de liaison (11) entre les parois extérieures du moyen d'arrêt de hanche (8),
- un côté extérieur non élastique (12) du moyen d'arrêt de hanche (8),
- un mécanisme de réglage manuel (13) pour raccourcir le côté extérieur non élastique (12),
- un élément de liaison (14) entre le moyen d'arrêt de hanche (8) et la suspension (7) avec fonction de visualisation.

7. Aide à la locomotion (1) selon l'une des revendications précédentes, **caractérisée en ce que** l'aide à la locomotion est réalisée sous forme de déambulateur de sport, de thérapie ou de danse, dans des maisons de soins, des hôpitaux, des sanatoriums, des installations sportives pour personnes âgées et dans le secteur privé, de préférence à domicile.
